# EUROPÄISCHE PATENTSCHRIFT

(11) **EP 3 637 592 B1**
(45) Veröffentlichungstag und Bekanntmachung des Hinweises auf die Patenterteilung: **28.04.2021**
(21) Anmeldenummer: 18465595.9
(22) Anmeldetag: 10.10.2018
(51) Int. Cl.: H02K 3/52, H02K 5/08, H02K 5/22

(54) **ELEKTROMOTOR STATOR**
ELECTRIC MOTOR STATOR
STATOR DE MOTEUR ÉLECTRIQUE

(43) Veröffentlichungstag der Anmeldung: 15.04.2020
(73) Patentinhaber: Vitesco Technologies GmbH, 30165 Hannover (DE)
(72) Erfinder: Aronet, Vlad, 325300 Bocsa, Caras-Severin (RO)

(56) Entgegenhaltungen:
- WO-A1-2017/133737
- US-A1- 2017 324 284

## Beschreibung

Die vorliegende Erfindung betrifft einen Stator für einen Elektromotor, einen Elektromotor mit dem Stator und ein Verfahren zum Herstellen des Stators.

Elektromotoren weisen allgemein einen Stator mit Spulenwicklungen und einen Rotor auf. Durch entsprechende elektrische Versorgung der Spulenwicklungen wird ein in einer Umfangsrichtung umlaufendes Magnetfeld erzeugt, dem der Rotor folgt und sich dabei um eine Rotationsachse (des Elektromotors bzw. Stators) dreht.

Die WO 2017/133737 A1 betrifft einen Elektromotor für eine Fluidpumpe, insbesondere eine Ölpumpe, welcher ein Gehäuse umfasst, in dem ein Stator, ein Rotor und eine Abgriffplatte angeordnet sind, wobei die Abgriffplatte Verschaltungskontakte zur elektrischen Verbindung mit Wicklungen des Stators und Verbindungselemente zur Verbindung mit einer Steuerungselektronik und/oder Positionierelektronik aufweist, die Abgriffplatte durch ein Kunststoffmaterial gebildet und/oder umspritzt ist, und der Stator durch eine Umspritzung ummantelt ist, die einen Lagersitz für den Rotor bildet.

Die US 2017/324284 A1 betrifft einen elektronischen Aktuator, der aus einem mehrphasigen bürstenlosen Motor mit einem Rotor, der mit Permanentmagneten versehen und an einer Ausgangswelle befestigt ist, einem Stator, der Spulen trägt und den magnetischen Antrieb des Rotors bereitstellt, und einer ersten elektrischen Verbindungsanordnung besteht, die die Spulen mit Energie versorgt, wobei der Stator in ein Statormodul eingebaut ist, das aus einem Material besteht, das den gewickelten Stator sowie die erste elektrische Verbindungsanordnung bedeckt.

Eine Aufgabe einer Ausführung der vorliegenden Erfindung ist es, einen Elektromotor bzw. Stator für einen Elektromotor bzw. dessen Herstellung zu verbessern.

Diese Aufgabe wird durch einen Stator mit den Merkmalen des Anspruchs 1 gelöst. Ansprüche 10, 11 stellen einen Elektromotor mit einem hier beschriebenen Stator bzw. ein Verfahren zum Herstellen eines hier beschriebenen Stators unter Schutz. Vorteilhafte Ausführungsformen der Erfindung sind Gegenstand der Unteransprüche.

Nach einer Ausführung der vorliegenden Erfindung weist ein Stator für einen Elektromotor bzw. eines Elektromotors eine Mehrzahl von, insbesondere wenigstens teilweise metallischen, Leitungen auf, mit denen Spulenwicklungen des Stators elektrisch bzw. mit Strom bzw. Spannung versorgbar sind bzw. versorgt werden bzw. die hierzu vorgesehen, insbesondere eingerichtet, sind bzw. verwendet werden.

In einer Ausführung sind die Leitungen integral bzw. einstückig mit den Spulenwicklungen ausgebildet, insbesondere können die Leitungen wenigstens teilweise zu den Spulen gewickelt sein.

In einer anderen Ausführung sind die Leitungen und die Spulenwicklungen separat hergestellt und in einer Weiterbildung anschließend zur elektrischen Versorgung der Spulenwicklungen über die Leitungen miteinander, in einer Ausführung stoffschlüssig, verbunden.

In einer Ausführung verbinden die Leitungen jeweils wenigstens zwei, in einer Weiterbildung (in Umfangsrichtung des Stators) benachbarte Spulenwicklungen.

In einer Ausführung sind die Leitungen wenigstens teilweise mit einer Isolierhülle, die in einer Weiterbildung Kunststoff aufweist, insbesondere hieraus bestehen kann, ummantelt. Dadurch kann in einer Ausführung der Stator kompakter und/oder einfacher hergestellt und/oder sein Betriebsverhalten verbessert werden. Nach einer Ausführung der vorliegenden Erfindung weist der Stator eine Mehrzahl von elektrischen Anschlüssen auf, mit denen in einer Ausführung die Leitungen elektrisch bzw. mit Strom bzw. Spannung versorgbar sind bzw. versorgt werden bzw. die hierzu vorgesehen, insbesondere eingerichtet, sind bzw. verwendet werden.

Nach einer Ausführung der vorliegenden Erfindung sind bzw. werden die vorstehend genannten Leitungen in einem ein- oder mehrteiligen Statorkörper, insbesondere bei dessen Urformen, wenigstens teilweise eingeformt, insbesondere wenigstens teilweise eingegossen, in einer Ausführung wenigstens teilweise eingespritzt, insbesondere mit Kunststoff. Der Statorkörper weist somit in einer Ausführung Kunststoff auf, er kann insbesondere hieraus bestehen, insbesondere urgeformt werden bzw. sein. Der Kunststoff ist in einer Ausführung elektrisch isolierend.

Hierdurch kann in einer Ausführung die Zuverlässigkeit und/oder das Gewicht des Stators verbessert werden.

Nach einer Ausführung der vorliegenden Erfindung werden, insbesondere nach dem Einformen und/oder materialentfernend, insbesondere -abtragend, Bohrungen, in einer Ausführung Sacklochbohrungen, hergestellt, welche die Leitungen, insbesondere (wenigstens) deren Isolierhülle, an- oder durchschneiden, bzw. weist der Statorkörper diese Bohrungen auf.

Nach einer Ausführung der vorliegenden Erfindung sind bzw. werden diese Bohrungen wenigstens teilweise mit Leitmitteln gefüllt, die die Leitungen und die Anschlüsse elektrisch miteinander verbinden.

Dadurch kann in einer Ausführung eine vorteilhafte, insbesondere kompakte, zuverlässige, leichte und/oder einfach und/oder prozesssicher herzustellende, elektrische Versorgung der Spulenwicklungen realisiert werden.

In einer Ausführung sind die Leitmittel integral bzw. einstückig mit den Anschlüssen ausgebildet.

Dadurch kann in einer Ausführung die Montage und/oder der elektrische Widerstand verbessert werden.

In einer anderen Ausführung sind die Leitmittel und die Anschlüsse separat hergestellt und anschließend zur elektrischen Versorgung der Spulenwicklungen miteinander, in einer Ausführung form-, reib- und/oder stoffschlüssig verbunden.

Dadurch können in einer Ausführung die Anschlüsse vorteilhaft, insbesondere flexibel, positioniert und/oder das wenigstens teilweise Füllen der Bohrungen mit den Leitmitteln verbessert werden.

In einer Ausführung schließen Längsachsen der Bohrungen mit einer Rotations- bzw. Haupt- bzw. Längsachse des Stators, um die (dieser) ein (en) Rotor des Elektromotors dreht, einen Winkel ein, der höchstens 30°, insbesondere höchstens 15°, in einer Ausführung höchstens 5° beträgt.

Mit anderen Worten sind die Bohrungen in einer Ausführung, wenigstens im Wesentlichen, Axialbohrungen bzw. parallel zur Rotations- bzw. Haupt- bzw. Längsachse des Stators.

Dadurch kann in einer Ausführung die Herstellung verbessert, insbesondere vereinfacht und/oder beschleunigt, werden.

In einer Ausführung schließen Längsachsen der Bohrungen mit der Rotations- bzw. Haupt- bzw. Längsachse des Stators, um die (dieser) ein (en) Rotor des Elektromotors dreht, einen Winkel ein, der zwischen 60° und 120°, insbesondere zwischen 75° und 105°, in einer Ausführung zwischen 85° und 95° beträgt.

Mit anderen Worten sind die Bohrungen in einer Ausführung, wenigstens im Wesentlichen, Radialbohrungen bzw. senkrecht zur Rotations- bzw. Haupt- bzw. Längsachse des Stators.

Dadurch kann in einer Ausführung die axiale Bauhöhe reduziert und/oder eine (axiale) Stirnseite besser genutzt und/oder besser, insbesondere störungsfreier, ausgebildet werden.

In einer Ausführung schneiden die Bohrungen die Anschlüsse an oder durch.

Dadurch kann in einer Ausführung eine (noch) vorteilhafte(re), insbesondere kompakte(re), zuverlässige(re), leichte(re) und/oder (noch) einfach(er) und/oder prozesssicher(er) herzustellende, elektrische Versorgung der Spulenwicklungen realisiert werden.

In einer Ausführung weisen die Leitmittel Zinn, insbesondere eine Zinnlegierung, auf.

Dieses wird in einer Weiterbildung als Schmelze in die Bohrungen eingefüllt, in einer anderen Weiterbildung als Festkörper, insbesondere mit anschließendem Aufschmelzen.

Dadurch kann in einer Ausführung, insbesondere aufgrund des relativ niedrigen Schmelzpunktes von Zinn und in Hinblick auf die Isolierhülle, eine vorteilhafte elektrische Verbindung realisiert werden.

Zusätzlich oder alternativ weisen die Leitmittel in einer Ausführung elektrisch leitfähigen Klebstoff auf.

Auch hierdurch kann in einer Ausführung, insbesondere aufgrund des Wegfalls von Aufschmelzen und in Hinblick auf die Isolierhülle, eine elektrische Verbindung vorteilhaft hergestellt werden.

Allgemein sind bzw. werden in einer Ausführung die Leitmittel stoffschlüssig, insbesondere mittels wenigstens teilweisem Aufschmelzen, in den Bohrungen befestigt.

Dadurch kann in einer Ausführung eine vorteilhafte, insbesondere zuverlässige und/oder widerstandsarme, elektrische Verbindung realisiert werden.

In einer Ausführung sind bzw. werden die Leitmittel reibschlüssig, in einer Weiterbildung mittels Verschrauben oder Presspassungen, in den Bohrungen befestigt. In einer Weiterbildung weisen die Leitmittel entsprechend Schrauben oder Presssitze auf, sie können insbesondere Schrauben oder Einpresskörper, insbesondere Einpressstifte, bzw. Abschnitte hiervon sein.

Dadurch kann in einer Ausführung eine vorteilhafte, insbesondere zuverlässige und/oder (de)montagefreundliche, elektrische Verbindung realisiert werden.

Allgemein sind in einer Ausführung die Leitmittel beim wenigstens teilweisen (Be)Füllen der Bohrungen, insbesondere elastisch und/oder plastisch deformierbare bzw. deformierte, Festköper bzw. werden bzw. sind (als Festkörper) wenigstens teilweise in die Bohrungen eingeführt, die dadurch mit diesen Leitmitteln gefüllt werden bzw. sind, was in einer Ausführung das Füllen der bzw. Einführen in die Bohrungen erleichtert.

In einer anderen Ausführung werden die, insbesondere beim (Be)Füllen flüssigen, körnigen, pulverförmigen oder pastösen, Leitmittel nach dem wenigstens teilweisen (Be)Füllen der Bohrungen in diesen fest bzw. sind nach dem wenigstens teilweisen (Be)Füllen der Bohrungen in diesen ausgehärtet, was in einer Ausführung die elektrische Verbindung verbessert.

In einer Ausführung sind bzw. werden die Anschlüsse wenigstens teilweise in den Statorkörper eingeformt, in einer Ausführung beim wenigstens teilweisen Einformen der Leitungen in dem Statorkörper, insbesondere also wenigstens teilweise eingegossen, in einer Ausführung wenigstens teilweise eingespritzt, insbesondere mit Kunststoff.

Dadurch kann in einer Ausführung eine (noch) vorteilhafte(re), insbesondere kompakte(re), zuverlässige(re), leichte(re) und/oder (noch) einfach(er) und/oder prozesssicher(er) herzustellende, elektrische Versorgung der Spulenwicklungen realisiert werden.

In einer Ausführung weist der Stator einen ein- oder mehrteiligen Kontaktring auf, der seinerseits die Anschlüsse aufweist, welche sich in einer Ausführung radial (zur Rotationsachse des Stators) nach außen erstrecken.

In einer Ausführung ist bzw. wird der Kontaktring wenigstens teilweise in den Statorkörper eingeformt, in einer Ausführung beim wenigstens teilweisen Einformen der Leitungen in dem Statorkörper, insbesondere also wenigstens teilweise eingegossen, in einer Ausführung wenigstens teilweise eingespritzt, insbesondere mit Kunststoff.

Dadurch kann in einer Ausführung eine (noch) vorteilhafte(re), insbesondere kompakte(re), zuverlässige(re), leichte(re) und/oder (noch) einfach(er) und/oder prozesssicher(er) herzustellende, elektrische Versorgung der Spulenwicklungen realisiert werden.

In einer Ausführung ist bzw. wird der Kontaktring wenigstens teilweise (axial) auf den, insbesondere urgeformten, Statorkörper aufgeschoben, in einer Ausführung umgreift der Kontaktring den Statorkörper in Umfangsrichtung. In einer Ausführung wird bzw. ist der Kontaktring reibschlüssig, insbesondere durch die Leitmittel und/oder eine Presspassung, an dem Statorkörper befestigt.

Dadurch kann in einer Ausführung die Herstellung und/oder (De)Montage verbessert werden.

In einer Ausführung weist der Stator eine ein- oder mehrteilige Leiterplatte, insbesondere eine Platine bzw. Trägerplatte für bzw. mit elektronischen Bauteilen und/oder gedruckten Schaltungen, insbesondere also ein PCB ("printed circuit board") auf, die ihrerseits die Anschlüsse aufweist.

Leiterplatte und Statorkörper werden bzw. sind in einer Ausführung separat hergestellt und/oder, insbesondere beim Herstellen des Stators, durch Vorsprünge (an) der Leiterplatte fixiert, die in Aussparungen, in einer Ausführung die Bohrungen, in dem bzw. des Statorkörper(s) eingreifen. Zusätzlich oder alternativ werden bzw. sind in einer Ausführung, insbesondere beim Herstellen des Stators, Leiterplatte und Statorkörper durch Vorsprünge an dem bzw. des Statorkörper(s) fixiert, die in Aussparungen (in) der Leiterplatte eingreifen.

Dadurch kann in einer Ausführung die Leiterplatte einfach(er) und/oder zuverlässig(er) am Statorkörper befestigt werden bzw. sein.

In einer Ausführung berühren die, in einer Ausführung abgewinkelten, Anschlüsse die Leitungen, in einer Weiterbildung berühren abgewinkelte Endflansche der Anschlüsse die Leitungen.

Dadurch können die Anschlüsse die Leitungen in einer Ausführung beim wenigstens teilweisen Einformen vorteilhaft fixieren. Durch abgewinkelte Anschlüsse, insbesondere Endflansche, können diese die Leitungen in einer Ausführung besonders vorteilhaft beim wenigstens teilweisen Einformen fixieren.

In einer Ausführung sind bzw. werden die Leitungen zwischen in Umfangsrichtung benachbarten Spulenwicklungen in Axialrichtung abgewinkelt, wobei in einer Ausführung die Bohrungen die in Axialrichtung abgewinkelten bzw. verlaufenden Abschnitte der Leitungen ("Axialabschnitte"), insbesondere deren Isolierhülle, an- bzw. durchschneiden.

Zusätzlich oder alternativ greifen in einer Ausführung die Anschlüsse axial zwischen in Umfangsrichtung benachbarte in Axialrichtung abgewinkelte Axialabschnitte der Leitungen ein, wobei diese Anschlüsse in einer Weiterbildung keilförmig sind.

Dadurch können in einer Ausführung Kontaktflächen zwischen den Leitungen und den Leitmitteln und/oder Anschlüssen vorteilhaft vergrößert und/oder eine Fixierung der Leitungen beim wenigstens teilweisen Einformen verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil eines Stators bei dessen Herstellung nach einer Ausführung der vorliegenden Erfindung in perspektivischer Ansicht;
- Fig. 2: den Stator mit einem Kontaktring;
- Fig. 3: Leitungen des Stators in vergrößerter perspektivischer Ansicht;
- Fig. 4: Anschlüsse des Kontaktrings des Stators in vergrößerter perspektivischer Ansicht;
- Fig. 5: Anschlüsse nach einer weiteren Ausführung der vorliegenden Erfindung in Fig. 4 entsprechender Darstellung;
- Fig. 6: den Stator mit eingeformten Leitungen und teilweise eingeformtem Kontaktring;
- Fig. 7: einen Teilschnitt durch eine Bohrung des Stators;
- Fig. 8: den Stator mit eingeformten Leitungen und teilweise eingeformtem Kontaktring nach einer weiteren Ausführung der vorliegenden Erfindung in Fig. 6 entsprechender Darstellung;
- Fig. 9: einen Teilschnitt durch eine Bohrung des Stators der Fig. 8;
- Fig. 10: einen Stator nach einer weiteren Ausführung der vorliegenden Erfindung;
- Fig. 11: Leitungen eines Stators nach einer weiteren Ausführung der vorliegenden Erfindung in vergrößerter axialer Drausicht;
- Fig. 12: Anschlüsse eines Kontaktrings des Stators der Fig. 11 in vergrößerter perspektivischer Ansicht;
- Fig. 13: Anschlüsse eines Kontaktrings eines Stators nach einer weiteren Ausführung der vorliegenden Erfindung in Fig. 12 entsprechender Darstellung;
- Fig. 14: einen Teilschnitt durch eine Bohrung des Stators der Fig. 12;
- Fig. 15: einen Teilschnitt durch eine Bohrung eines Stators nach einer weiteren Ausführung der vorliegenden Erfindung;
- Fig. 16: ein in der Bohrung der Fig. 15 befestigtes Leitmittel; und
- Fig. 17: einen Stator nach einer weiteren Ausführung der vorliegenden Erfindung in perspektivischer Ansicht mit einer Detailvergrößerung.

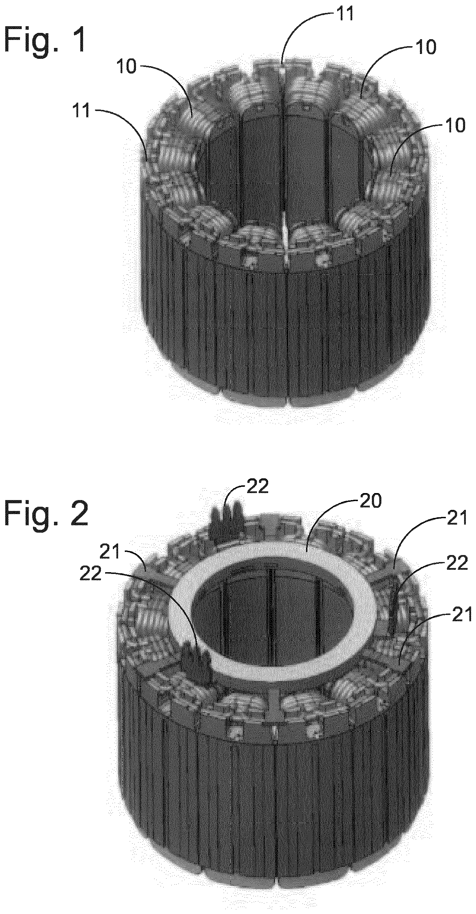

Fig. 1 zeigt einen Teil eines Stators bei dessen Herstellung nach einer Ausführung der vorliegenden Erfindung in perspektivischer Ansicht.

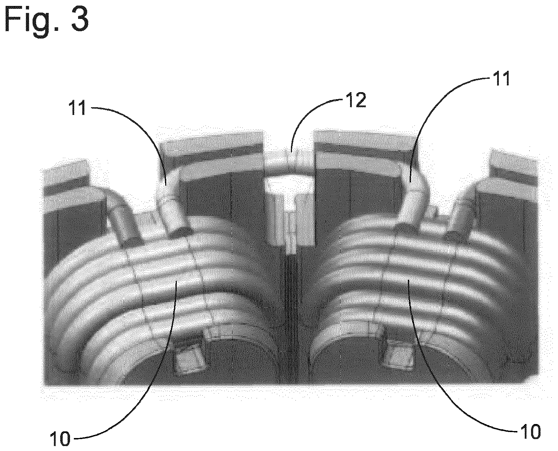

Der Stator weist mehrere in einer Umfangsrichtung verteilt angeordnete Spulenwicklungen 10 sowie Leitungen 11 zur elektrischen Versorgung der Spulenwicklungen auf, die in Umfangsrichtung benachbarte Spulenwicklungen 10 miteinander verbinden und in Fig. 3 in vergrößerter perspektivischer Ansicht dargestellt sind. Dabei können die Leitungen 11 teilweise zu den Spulenwicklungen 10 aufgewickelt bzw. integral mit den Spulenwicklungen 10 ausgebildet sein.

In einer nicht dargestellten Abwandlung verbinden die Leitungen 11 (zunächst) die in Umfangsrichtung benachbarten Spulenwicklungen 10 (noch) nicht miteinander, insbesondere kann beispielsweise anstelle des Abschnitts 12 in Fig. 3 ein Spalt zwischen den Leitungen 11 (zur elektrischen Versorgung) in Umfangsrichtung benachbarter Spulenwicklungen 10 ausgebildet sein.

Zum Herstellen des Stators wird ein Kontaktring 20 mit Anschlüssen 21, die sich radial nach außen erstrecken, auf die Spulenwicklungen 10 aufgesetzt, wie durch die Figurenfolge Fig. 1 → Fig. 2 angedeutet.

Der Kontaktring 20 weist drei Außenkontakte 22 zur dreiphasigen elektrischen Versorgung von je zwei der sechs Anschlüsse 21 auf.

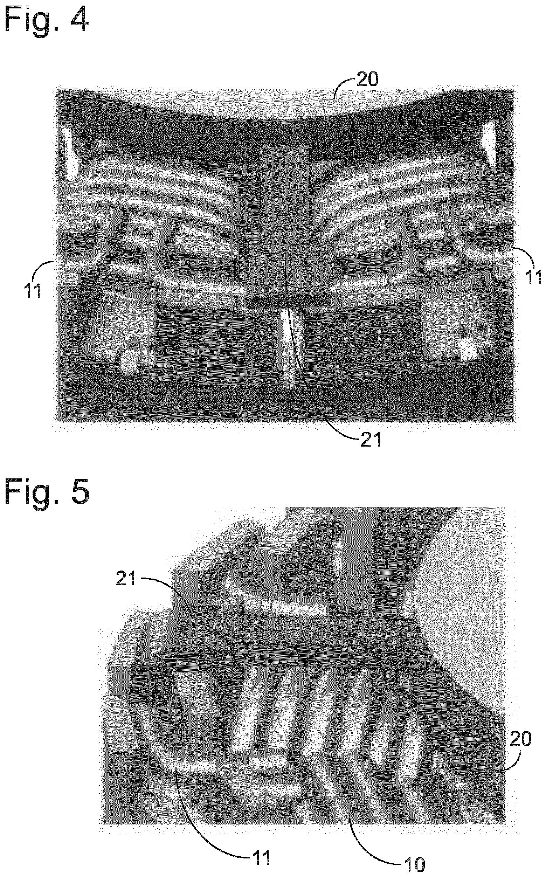

In der vergrößerten Darstellung der Fig. 4 wird deutlich, dass die Anschlüsse 21 des aufgesetzten Kontaktrings 20 die Leitungen 11 axial berühren und dadurch beim nachfolgenden Spritzguss-Eingießen mit Kunststoff vorteilhaft fixieren.

Fig. 5 zeigt in Fig. 4 entsprechender Darstellung abgewinkelte Anschlüsse bzw. deren abgewinkelte Endflansche nach einer weiteren Ausführung der vorliegenden Erfindung, die ebenfalls die Leitungen 11 axial berühren und dadurch beim nachfolgenden Spritzgut-Eingießen mit Kunststoff vorteilhaft fixieren.

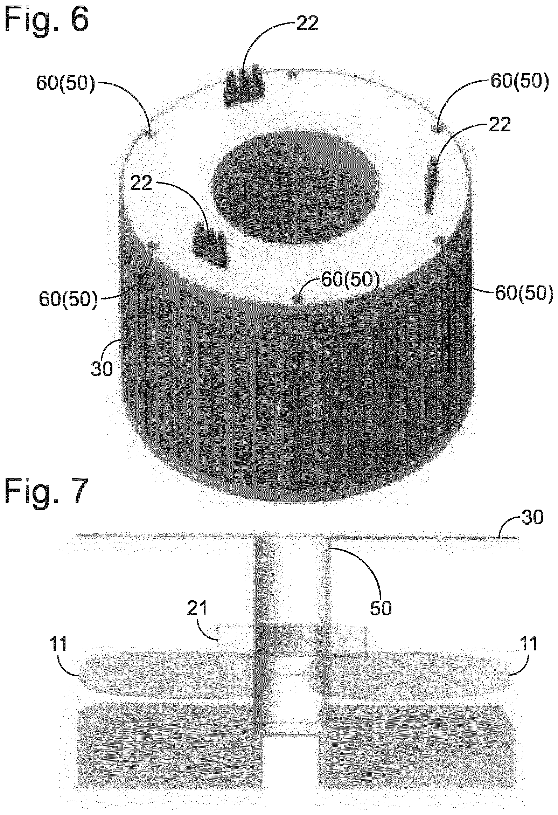

Nach dem Aufsetzen des Kontaktrings 20 werden dieser und die durch seine Anschlüsse 21 fixierten Leitungen 11 mit Kunststoff eingegossen, der dabei einen in Fig. 6 gezeigten Statorkörper 30 bildet.

Anschließend werden Axialbohrungen 50 auf der Stirnseite des Statorkörpers 30 hergestellt, von denen eine in einem Teilschnitt in Fig. 7 gezeigt ist.

Wie man in dem Teilschnitt, der parallel zur Bohrungsachse ist, erkennt, schneidet die Axialbohrung 50 sowohl den Anschluss 21 als auch die Leitung(en) 11.

Anschließend werden Leitmittel 60 in die Axialbohrungen 50 gefüllt, indem die Axialbohrungen 50 in einer Ausführung mit einer Zinnlegierung oder elektrisch leitfähigem Klebstoff gefüllt oder Schrauben in die Axialbohrungen 50 eingeschraubt werden.

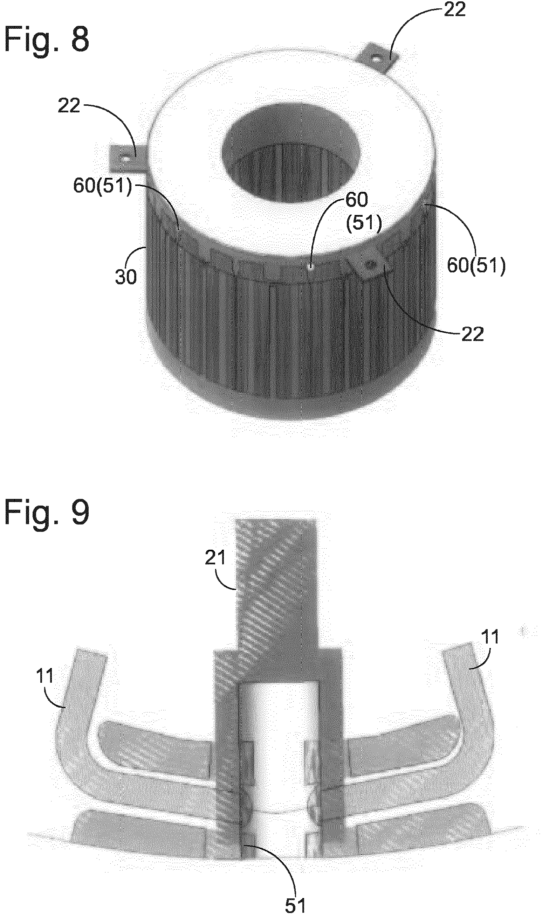

Fig. 8 zeigt in Fig. 6 entsprechender Darstellung einen Statorkörper 30 eines im Übrigen baugleichen Stators nach einer weiteren Ausführung der vorliegenden Erfindung, bei dem jedoch anstelle der Axialbohrungen 50 Radialbohrungen 51 auf der Mantelfäche des Statorkörpers 30 hergestellt sind bzw. werden, von denen eine in einem Teilschnitt in Fig. 9 gezeigt ist.

Wie man in diesem Teilschnitt, der wiederum parallel zur Bohrungsachse ist, erkennt, schneidet die Radialbohrung 51 sowohl den Anschluss 21 als auch die Leitung(en) 11.

Anschließend werden Leitmittel 60 in die Radialbohrungen 51 gefüllt, indem die Radialbohrungen 51 in einer Ausführung mit einer Zinnlegierung oder elektrisch leitfähigem Klebstoff gefüllt oder Schrauben in die Radialbohrungen 51 eingeschraubt werden.

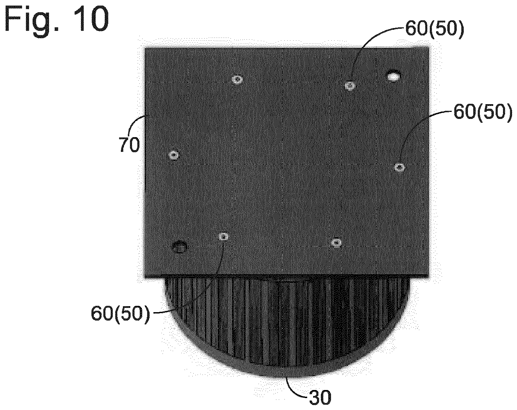

Fig. 10 zeigt einen Stator nach einer Ausführung der vorliegenden Erfindung in perspektivischer Ansicht.

Bei diesem im Übrigen zur vorstehenden Ausführung baugleichen Stator entfällt der Kontaktring 20.

Somit werden hier die Leitungen 11 mit Kunststoff eingegossen, der dabei den Statorkörper 30 bildet.

Anschließend werden Axialbohrungen 50 auf der Stirnseite des Statorkörpers 30 hergestellt, eine Leiterplatte 70 mit passenden Durchgangsbohrungen aufgesetzt und Leitmittel 60 in diese miteinander fluchtenden Axial- und Durchgangsbohrungen gefüllt, indem sie in einer Ausführung mit einer Zinnlegierung oder elektrisch leitfähigem Klebstoff gefüllt oder Schrauben eingeschraubt werden.

Dabei werden bzw. sind Leiterplatte 70 und Statorkörper 30 durch Vorsprünge (an) der Leiterplatte 70 fixiert, die in die Axialbohrungen 50 in dem Statorkörper eingreifen (in der Ansicht der Fig. 10 nicht sichtbar) . Zusätzlich oder alternativ kann auch der Statorkörper 30 axiale Vorsprünge aufweisen, die in die Durchgangsbohrungen der Leiterplatte 70 eingreifen und so Leiterplatte 70 und Statorkörper 30 aneinander fixieren.

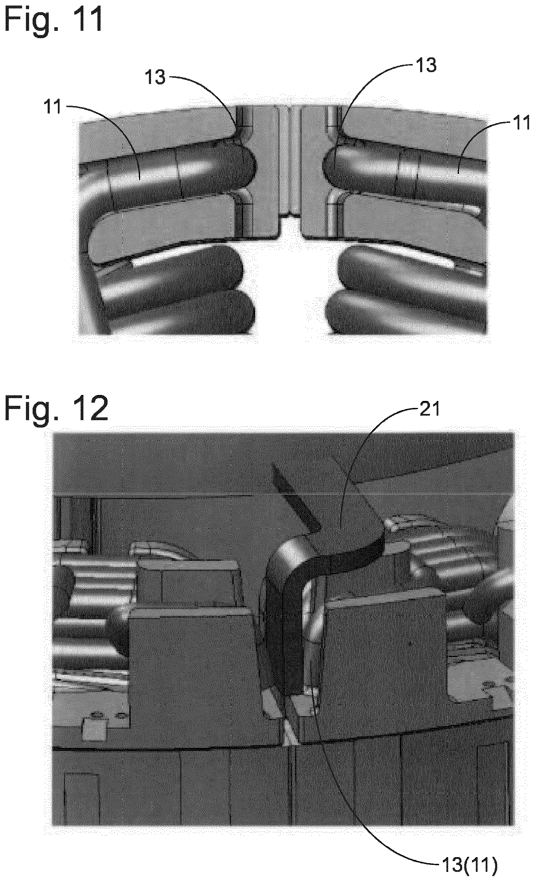

Fig. 11 zeigt analog zu Fig. 3 Leitungen 11 nach einer weiteren Ausführung der vorliegenden Erfindung, die in Axialrichtung abgewinkelte Abschnitte 13 aufweisen. In einer nicht dargestellten Abwandlung verbinden die Leitungen 11 (wenigstens zunächst) in Umfangsrichtung benachbarte Spulenwicklungen 10 (noch) miteinander.

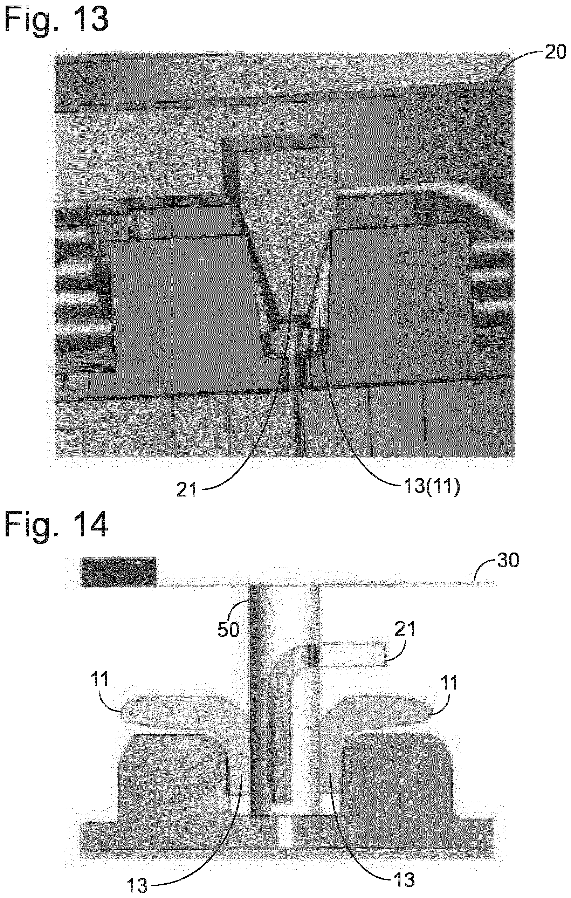

Die Anschlüsse 21 greifen axial zwischen diese (axial abgewinkelten) Axialabschnitte 13 ein, wie in Fig. 12, 13 in zwei Varianten dargestellt, wobei jeweils die Anschlüsse 21 die (abgewinkelten Abschnitte 13 der) Leitungen 11 berühren und dadurch beim Einformen fixieren, in der Variante der Fig. 13 vorteilhaft keilartig.

Wie vorstehend bereits mit Bezug auf den im Übrigen baugleichen Stator der Fig. 6 erläutert, werden nach dem Aufsetzen des Kontaktrings mit seinen Anschlüssen 21 dieser und die durch seine Anschlüsse 21 fixierten Leitungen 11 wenigstens teilweise mit elektrisch isolierendem Kunststoff eingegossen, der dabei den Statorkörper bildet.

Anschließend werden Axialbohrungen 50 auf der Stirnseite des Statorkörpers 30 hergestellt, von denen eine in einem Teilschnitt in Fig. 14 gezeigt ist.

Wie man in dem Teilschnitt erkennt, schneidet die Axialbohrung 50 sowohl den Anschluss 21 als auch die Leitung (en) 11 bzw. deren Axialabschnitte 13.

Anschließend werden Leitmittel 60 in die Axialbohrungen 50 gefüllt, indem die Axialbohrungen 50 in einer Ausführung mit einer Zinnlegierung oder elektrisch leitfähigem Klebstoff gefüllt oder Schrauben in die Axialbohrungen 50 eingeschraubt werden.

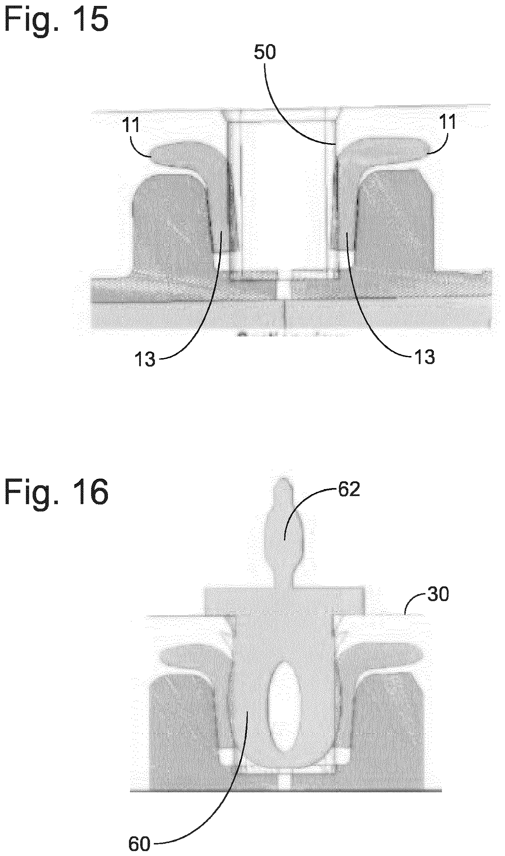

Fig. 15 zeigt einen Teilschnitt durch eine Bohrung eines Stators nach einer weiteren Ausführung der vorliegenden Erfindung in Fig. 14 entsprechender Darstellung.

Bei dieser im Übrigen zur Ausführung der Fig. 11 baugleichen Ausführung entfällt der Kontaktring 20.

Somit werden hier die Leitungen 11 mit Kunststoff eingegossen, der dabei den Statorkörper 30 bildet.

Anschließend werden Axialbohrungen 50 auf der Stirnseite des Statorkörpers 30 hergestellt. Wie man in dem Teilschnitt der Fig. 15 erkennt, schneidet die Axialbohrung 50 die Axialabschnitte 13 der Leitung(en) 11 an.

Anschließend werden Leitmittel mit integrierten Anschlüssen in Form von Steckern 62 in die Axialbohrungen 50 eingeführt und in diesen mittels Presspassungen reibschlüssig befestigt. In Fig. 16 ist hierzu in fachüblicher Weise die unverformte Kontur angedeutet, die beim Einführen elastisch komprimiert wird.

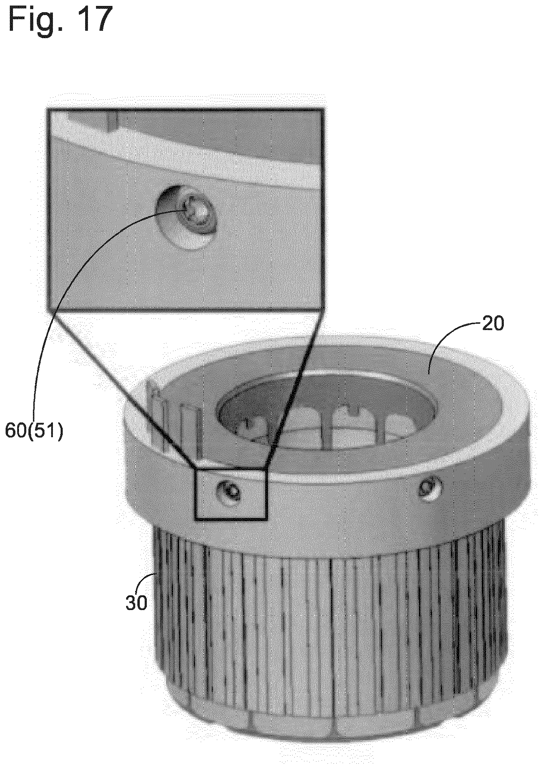

Fig. 17 zeigt einen Stator nach einer weiteren Ausführung der vorliegenden Erfindung in perspektivischer Ansicht mit einer Detailvergrößerung (oben in Fig. 17).

Bei dieser Ausführung wird zunächst der Statorkörper 30 urgeformt, wie vorstehend mit Bezug auf die Ausführung der Fig. 10 erläutert.

Anschließend wird der separat hergestellte Kontaktring 20 axial auf den Statorkörper 30 aufgeschoben, so dass er diesen umgreift.

Dann werden Radialbohrungen 51 durch den Kontaktring 20, insbesondere dessen eingegossenen Anschlüsse, und die in dem Statorkörper 30 eingeformten Leitungen 11 getrieben und Leitmittel 60 in die Radialbohrungen 51 gefüllt, indem Schrauben in die Radialbohrungen 51 eingeschraubt werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

| | |
|---|---|
| 10 | Spulenwicklung |
| 11 | Leitung |
| 12 | Verbindungsabschnitt |
| 13 | axial abgewinkelter Axialabschnitt |
| 20 | Kontaktring |
| 21 | Anschluss |
| 22 | Außenkontakte |
| 30 | Statorkörper |
| 50 | Axialbohrung |
| 51 | Radialbohrung |
| 60 | Leitmittel |
| 62 | Stecker |
| 70 | Leiterplatte |

## Patentansprüche

1. Stator für einen Elektromotor, wobei der Stator
eine Mehrzahl von Leitungen (11) zur elektrischen Versorgung von Spulenwicklungen (10) des Stators; und
eine Mehrzahl von elektrischen Anschlüssen (21; 62) aufweist, wobei
diese Leitungen in einem Statorkörper (30) wenigstens teilweise eingeformt sind; und
der Statorkörper Bohrungen (50; 51) aufweist, welche die Leitungen an- oder durchschneiden und
wenigstens teilweise mit Leitmitteln (60; 62) gefüllt sind, wobei diese Leitmittel die Leitungen und die Anschlüsse elektrisch verbinden.

2. Stator nach dem vorhergehenden Anspruch, wobei Längsachsen der Bohrungen mit einer Rotationsachse des Stators einen Winkel einschließen, der höchstens 30° oder zwischen 60° und 120° beträgt.

3. Stator nach einem der vorhergehenden Ansprüche, wobei die Bohrungen die Anschlüsse an- oder durchschneiden.

4. Stator nach einem der vorhergehenden Ansprüche, wobei die Leitmittel Zinn und/oder elektrisch leitfähigen Klebstoff aufweisen und/oder stoff- oder reibschlüssig, insbesondere mittels Verschrauben oder Presspassungen, in den Bohrungen befestigt sind.

5. Stator nach einem der vorhergehenden Ansprüche, mit einem Kontaktring (20) oder einer Leiterplatte (70), der bzw. die die Anschlüsse aufweist.

6. Stator nach einem der vorhergehenden Ansprüche, wobei die Anschlüsse wenigstens teilweise in den Statorkörper eingeformt sind und/oder der Kontaktring wenigstens teilweise in den Statorkörper eingeformt oder auf diesen aufgeschoben ist.

7. Stator nach einem der vorhergehenden Ansprüche, wobei die, insbesondere abgewinkelten, Anschlüsse die Leitungen berühren.

8. Stator nach einem der vorhergehenden Ansprüche, wobei die Leitungen zwischen in Umfangsrichtung benachbarten Spulenwicklungen in Axialrichtung abgewinkelt sind.

9. Stator nach einem der vorhergehenden Ansprüche, wobei die Leitungen (11) wenigstens teilweise mit einer Isolierhülle ummantelt sind und die Bohrungen (50; 51) die Isolierhülle der Leitungen an- oder durchschneiden.

10. Elektromotor mit einem Stator nach einem der vorhergehenden Ansprüche.

11. Verfahren zum Herstellen eines Stators nach einem der vorhergehenden Ansprüche, mit den Schritten wenigstens teilweises Einformen der Leitungen (11) in dem Statorkörper (30);
Herstellen der Bohrungen (50; 51); und
wenigstens teilweises Füllen der Bohrungen mit den Leitmitteln (60; 62).

## Claims

1. Stator for an electric motor, wherein the stator has a plurality of lines (11) for supplying electricity to coil windings (10) of the stator; and a plurality of electrical connections (21; 62), wherein
these lines are at least partially formed in a stator body (30); and
the stator body has bores (50; 51) which penetrate into or through the lines and
are at least partially filled with conductive agents (60; 62), wherein these conductive agents electrically connect the lines and the connections.

2. Stator according to the preceding claim, wherein longitudinal axes of the bores form an angle of at most 30° or between 60° and 120° with a rotation axis of the stator.

3. Stator according to either of the preceding claims, wherein the bores penetrate into or through the connections.

4. Stator according to one of the preceding claims, wherein the conductive agents contain tin and/or electrically conductive adhesive and/or are fastened in a materially bonded or non-positively locking manner, in particular by means of screwing or interference fits, into the bores.

5. Stator according to one of the preceding claims, comprising a contact ring (20) or a printed circuit board (70) which has the connections.

6. Stator according to one of the preceding claims, wherein the connections are at least partially formed in the stator body and/or the contact ring is at least partially formed in the stator body or is pushed onto the said stator body.

7. Stator according to one of the preceding claims, wherein the, in particular angled, connections make contact with the lines.

8. Stator according to one of the preceding claims, wherein the lines between coil windings which are adjacent in the circumferential direction are angled in the axial direction.

9. Stator according to one of the preceding claims, wherein the lines (11) are at least partially sheathed by an insulating sleeve and the bores (50; 51) penetrate into or through the insulating sleeve of the lines.

10. Electric motor comprising a stator according to one of the preceding claims.

11. Method for producing a stator according to one of the preceding claims, comprising the steps of
at least partially forming the lines (11) in the stator body (30) ;
producing the bores (50; 51); and
at least partially filling the bores with the conductive agents (60; 62).

## Revendications

1. Stator destiné à un moteur électrique, le stator comportant une pluralité de lignes (11) destinées à l'alimentation électrique d'enroulements de bobine (10) du stator ; et une pluralité de connexions électriques (21 ; 62), ces lignes étant au moins partiellement moulées dans un corps de stator (30) ; et
le corps de stator (50 ; 51) comportant des alésages qui entaillent ou traversent les lignes et qui sont au moins partiellement remplis de moyens conducteurs (60 ; 62), ces moyens conducteurs reliant électriquement les lignes et les connexions.

2. Stator selon la revendication précédente, les axes longitudinaux des alésages formant avec un axe de rotation du stator un angle qui est au plus de 30° ou compris entre 60° et 120°.

3. Stator selon l'une des revendications précédentes, les alésages entaillant ou traversant les connexions.

4. Stator selon l'une des revendications précédentes, les moyens conducteurs comprenant de l'étain et/ou de l'adhésif électriquement conducteur et/ou étant fixés dans les alésages par une liaison de matière ou de friction, ou notamment par vissage ou ajustement serré.

5. Stator selon l'une des revendications précédentes, comprenant une bague de contact (20) ou un circuit imprimé (70) qui comporte les connexions.

6. Stator selon l'une des revendications précédentes, les connexions étant au moins partiellement moulées dans le corps de stator et/ou la bague de contact étant au moins partiellement moulée dans le corps de stator ou poussée sur celui-ci.

7. Stator selon l'une des revendications précédentes, les connexions, notamment coudées, touchant les lignes.

8. Stator selon l'une des revendications précédentes, les lignes entre des enroulements de bobine adjacents dans la direction circonférentielle étant coudées dans la direction axiale.

9. Stator selon l'une des revendications précédentes, les lignes (11) étant au moins partiellement gainées d'un manchon isolant et les alésages (50 ; 51) entamant ou traversant le manchon isolant des lignes.

10. Moteur électrique pourvu d'un stator selon l'une des revendications précédentes.

11. Procédé de fabrication d'un stator selon l'une des revendications précédentes, le procédé comprenant les étapes suivantes :
mouler au moins partiellement les lignes (11) dans le corps de stator (30) ;
réaliser les alésages (50 ; 51) ; et
remplir au moins partiellement les alésages avec les moyens conducteurs (60 ; 62).
